# EUROPEAN PATENT APPLICATION

(11) **EP 4 697 425 A1**
(43) Date of publication of application: **18.02.2026**
(21) Application number: 24836258.4
(22) Date of filing: 27.06.2024
(51) Int. Cl.: H01M 10/0565, H01M 4/13, H01M 4/62, H01M 10/052, H01M 10/058, H01M 50/446

(54) **HETEROGENEOUS ELECTROLYTE-BASED SECONDARY BATTERY AND METHOD FOR MANUFACTURING SAME**

(30) Priority: 04.07.2023 KR 20230086752
(71) Applicant: LG Energy Solution, Ltd., Seoul 07335 (KR)
(72) Inventor: LIM, Taeseob, Daejeon 34122 (KR); BYUN, Seoungwoo, Daejeon 34122 (KR); RYU, Jihoon, Daejeon 34122 (KR)
(74) Representative: Goddar, Heinz J.
(86) International application number: PCT/KR2024/008991
(87) International publication number: WO 2025/009810

(57) **Abstract**

A heterogenous electrolyte-based secondary battery includes: a cathode impregnated with a catholyte; an anode impregnated with an anolyte; and a separator interposed between the cathode and anode and including a polymer-based solid electrolyte, wherein the polymer-based solid electrolyte comprises a polymer resin and an electrolyte, and the catholyte and the anolyte have different compositions.

## Description

### [TECHNICAL FIELD]

The present application claims priority to and the benefit of Korean Patent Application No. 10-2023-0086752 filed on July 4, 2023 in the Korean Intellectual Property Office, the disclosures of which are incorporated herein by reference in their entirety.

The present disclosure relates to a heterogenous electrolyte-based secondary battery and a method for manufacturing the same.

### [BACKGROUND]

With technological development of electronic devices, and an increase in demand therefor, demand for secondary batteries as energy sources has been rapidly increasing. Among such secondary batteries, lithium secondary batteries having high energy density and voltage have been commercialized and widely used. Conventionally, an electrolyte in a liquid state, particularly, an ion conductive organic liquid electrolyte, in which a salt is dissolved in a non-aqueous organic solvent, has been mainly used as an electrolyte for a secondary battery. However, such electrolytes in liquid state have the disadvantage that not only is the organic solvent likely to be volatilized, but also it is lacking in safety due to combustion caused by ambient temperature and the temperature rise of the battery itself. Therefore, research has recently emerged to commercialize polymer electrolytes such as gel polymer electrolytes instead of electrolytes in liquid state.

The oxidation and reduction stability of the electrolyte components is important for the battery to operate over a wide operating voltage range. All secondary batteries which are used heretofore use a single electrolyte, however, when some solvents or additives, which are expected to have a significant effect in improving performance, decompose or form unwanted byproducts due to high-potential or low-potential side reactions, there is a problem that the battery performance deteriorates, which makes it impossible to use certain electrolyte components, or limits the operating potential, resulting in a decrease in cell voltage.

On the other hand, a lithiated Nafion (Li-Nafion) membrane is a polymer solid electrolyte which not only has a relatively high Li⁺ ion conductivity, but is also selectively permeable to Li⁺ ions and suppress the movement of anions, additives, solvents, etc. between the cathode and anode.

Therefore, there is a demand for the development of a heterogenous electrolyte-based secondary battery that can selectively permeate lithium ions while suppressing electrolyte flowability within the cell and has a wide operating voltage range.

### [DETAILED DESCRIPTION OF THE INVENTION]

### [Technical Problem]

Thus, the present inventors have attempted to solve problems that solvents or additives are decomposed or unwanted byproducts are formed due to high or low potential side reactions, leading to deterioration of battery performance, thereby providing a heterogenous electrolyte-based secondary battery having a wide operating voltage range.

According to one aspect, there is provided a heterogenous electrolyte-based secondary battery comprising: a cathode impregnated with a catholyte; an anode impregnated with an anolyte; and a separator interposed between the cathode and anode and including a polymer-based solid electrolyte, wherein the polymer-based solid electrolyte comprises a polymer resin and an electrolyte, and the catholyte and the anolyte have different compositions.

According to a further aspect, there is provided a method for manufacturing a heterogenous electrolyte-based secondary battery, the method comprising the steps of: impregnating a spare cathode and a spare anode with a catholyte and an anolyte, respectively, to prepare a cathode and an anode; impregnating a separator with a polymer-based solid electrolyte, or preparing an electrolyte layer as a polymer-based solid electrolyte membrane; and stacking the cathode, the electrolyte layer and the anode in this order.

### [Technical Solution]

Hereinafter, the electrolyte composition for lithium metal batteries and the like according to specific embodiments of the invention will be described.

Terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The terms used herein are provided to describe exemplary embodiments but are not intended to limit the inventive concept. The singular forms include plural forms unless the context clearly indicates otherwise.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

### Heterogenous Electrolyte-based Secondary Battery

According to one embodiment of the present disclosure, there is provided a heterogenous electrolyte-based secondary battery comprising: a cathode impregnated with a catholyte; an anode impregnated with an anolyte; and a separator interposed between the cathode and anode and including a polymer-based solid electrolyte, wherein the polymer-based solid electrolyte comprises a polymer resin and an electrolyte, and the catholyte and the anolyte have different compositions relative to each other.

### Separator

In an exemplary embodiment, the separator may comprise a polymer-based solid electrolyte containing a polymer resin, and specifically, the polymer-based solid electrolyte may be a polymer electrolyte formed by adding a polymer resin to a solvated lithium salt.

Thus, the polymer-based solid electrolyte may comprise at least one of a polymer resin, a lithium salt, a polymerization initiator, an additive, and a solvent, and the electrolyte may comprise at least one of a lithium salt, a polymerization initiator, an additive, and a solvent. For example, the polymer-based solid electrolyte may be composed of a polymer resin, a lithium salt, and a solvent, and thus and may minimize resistance.

In an exemplary embodiment, the separator may have a selective permeability to lithium ions (Li⁺).

In an exemplary embodiment, the polymer resin may comprise a perfluorosulfonic acid resin. For example, the perfluorosulfonic acid resin may be a lithiated Nafion.

In an exemplary embodiment, the separator may be a separator impregnated with a polymer-based solid electrolyte or a polymer-based solid electrolyte membrane. For example, as such separators, a general porous polymer film, for example, a porous polymer film produced by using a polyolefin-based polymer, such as an ethylene homopolymer, a propylene homopolymer, an ethylene/butene copolymer, an ethylene/hexene copolymer, an ethylene/methacrylate copolymer, may be used sorely, or they may be stacked and used together. Alternatively, a general porous nonwoven fabric, for example, a high-melting-point glass fiber, polyethylene terephthalate fibers, or the like may be used, but is not limited thereto.

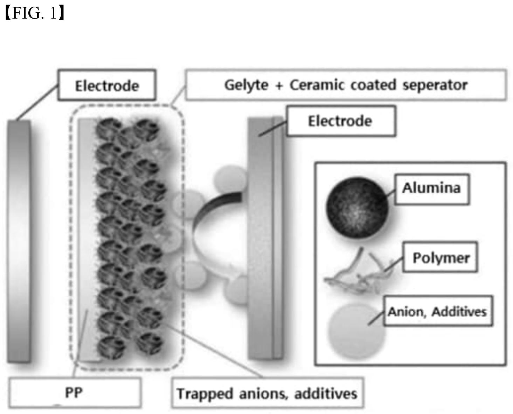

In an exemplary embodiment, the polymer resin content relative to the total weight of the separator may be 10 to 30 wt.%. For example, the content may be 10 to 20 wt.%, 15 to 25 wt.%, or 20 to 30 wt.%. In the above polymer resin content range, only lithium ions can be selectively permeated within the cell, thereby maintaining the state in which the heterogeneous electrolyte is isolated. FIG. 1 shows a schematic diagram of a mechanism for suppressing the movement of anions and additives between cathode and anode in a gel polymer secondary battery, wherein the gel polymer matrix is densely formed in a pore space of the coating layer and the separator, so that components larger in size than Li ions are physically isolated between cathode and anode.

In an exemplary embodiment, the lithium salt acts as a source of lithium ions in the battery to enable basic operation of a lithium secondary battery, and can play a role in promoting the movement of lithium ions between the cathode and anode, and those commonly used in electrolytes for lithium secondary batteries can be used without limitation. For example, the lithium salt may include Li ⁺ as a cation, and may include at least one selected from the group consisting of: F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (F₂SO₂)₂N⁻, CF₃CF₂(CF₃)₂CO⁻, (CF₃SO₂)₂CH⁻, CF₃(CF₂)₇SO₃⁻, CF₃CO₂⁻, CH₃CO₂⁻, SCN⁻ and (CF₃CF₂SO₂)₂N⁻ as an anion.

The lithium salt may be used alone or as a mixture of two or more thereof, as necessary. The lithium salt may be appropriately changed within the range that can be normally used, but may be included in the gel polymer electrolyte composition at a concentration of 0.8 M to 2 M, specifically 0.8 M to 1.5 M, in order to obtain an optimal effect of forming a film for preventing corrosion on the electrode surface.

Further, in an exemplary embodiment of the present disclosure, the solvent included in the polymer-based solid electrolyte is not limited as long as it may minimize decomposition due to an oxidation reaction during charge and discharge of a secondary battery and may exhibit desired characteristics with the additive. For example, an ether-based solvent, an ester-based solvent, an amide-based solvent or the like may be used alone or as a mixture of two or more thereof.

As the ether-based solvent among the organic solvents, any one selected from the group consisting of dimethyl ether, diethyl ether, dipropyl ether, methylethyl ether, methylpropyl ether, and ethylpropyl ether, or a mixture of two or more thereof may be used, but is not limited thereto.

Furthermore, the ester-based solvent may include at least one compound selected from the group consisting of a cyclic carbonate compound, a linear carbonate compound, a linear ester compound, and a cyclic ester compound.

Specific examples of the cyclic carbonate compound may be any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC), or a mixture of two or more thereof.

Further, specific examples of the linear carbonate compound may be any one selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more thereof, but are not limited thereto.

Specific examples of the linear ester compound may be any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester compound may be any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound has high permittivity as a highly viscous organic solvent and thus dissociates the lithium salt well in the electrolyte, the cyclic carbonate-based compound may be preferably used. Since a heterogenous electrolyte having high electrical conductivity may be prepared when the above cyclic carbonate-based compound is mixed with the low viscosity, low permittivity linear carbonate-based compounds, such as dimethyl carbonate and diethyl carbonate, and the linear ester-based compound in an appropriate ratio, the cyclic carbonate-based compound may be more preferably used.

In an exemplary embodiment, a typical polymerization initiator known in the art may be used as the polymerization initiator. For example, typical examples of the polymerization initiator may include organic peroxides or hydroperoxides, such as benzoyl peroxide, acetyl peroxide, dilauryl peroxide, di-tert-butyl peroxide, t-butyl peroxy-2-ethyl-hexanoate, cumyl hydroperoxide, and hydrogen peroxide, and at least one azo compound selected from the group consisting of 2,2'-azobis(2-cyanobutane), dimethyl 2,2'-azobis(2-methylpropionate), 2,2'-azobis(methylbutyronitrile), 2,2'-azobis(isobutyronitrile) (AIBN) and 2,2'-azobis(dimethylvaleronitrile (AMVN), but are not limited thereto.

The polymerization initiator may be decomposed by heat within a battery, for a nonlimiting example, temperatures of 30°C to 100°C, specifically, 60°C to 80°C, or decomposed at room temperature (5°C to 30°C), to form a radical, and may be reacted with the polymerizable oligomer by free radical polymerization to form a gel polymer electrolyte.

The polymerization initiator may be included in an amount of 0.1 part by weight to 5 parts by weight, based on 100 parts by weight of the oligomer. When the amount of the polymerization initiator is greater than 5 parts by weight, the unreacted polymerization initiator may remain during the production of a gel polymer electrolyte, which may adversely affect battery performance. By contrast, when the amount of the polymerization initiator is less than 0.1 part by weight, the gelation may not proceed smoothly even under conditions above a certain temperature.

Optionally, the polymer-based solid electrolyte may also further include an additional additive. As the additive which may be used in the present disclosure, vinylene carbonate, vinyl ethylene carbonate, fluoroethylene carbonate, vinylethylene carbonate, cyclic sulfite, saturated sultone, unsaturated sultone, and a non-cyclic sulfone may be used alone or as a mixture of two or more thereof.

In this case, the cyclic sulfite may include ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite, 1,3-butylene glycol sulfite, and the like, the saturated sultone may include 1,3-propane sultone, 1,4-butane sultone, and the like, the unsaturated sultone may include ethene sultone, 1,3-propene sultone, 1,4-butene sultone, 1-methyl-1,3-propene sultone, and the like, and the non-cyclic sulfone may include divinyl sulfone, dimethyl sulfone, diethyl sulfone, methyl ethyl sulfone, methyl vinyl sulfone, and the like.

The additives may be used as a mixture of two or more thereof, and may be included in an amount of 0.01 to 5 wt.%, particularly 0.01 to 3 wt.%, and more particularly 0.05 to 3 wt.%, based on the total weight of the polymer-based solid electrolyte. If the amount of the additive is less than 0.01 wt.%, effects of improving low-temperature output of the battery and improving high-temperature storage characteristics and high-temperature lifetime characteristics are insignificant, and, if the amount of the additive is greater than 5 wt.%, there is a possibility that the side reaction in the electrolyte excessively occurs during charge and discharge of the battery. In particular, since the additives are not sufficiently decomposed at high temperature when the additives for forming a solid electrolyte interface (SEI) are excessively added, the additional additives may be present as unreacted materials or precipitates in the electrolyte at room temperature. Accordingly, a side reaction may occur in which lifetime or resistance characteristics of the secondary battery are reduced.

### Cathode

In the heterogenous electrolyte-based secondary battery according to an embodiment of the present disclosure, the cathode may be prepared by forming a cathode mixture layer on a cathode current collector, and then impregnated with the catholyte. The cathode mixture layer may be prepared by coating the cathode current collector with a cathode slurry including a cathode active material, a binder, a conductive material, a solvent, and the like, and then drying and rolling the coated cathode collector.

In an exemplary embodiment, the catholyte may include a lithium salt and a solvent, and optionally an additive. In this case, the catholyte may include a solvent with poor reduction stability or a cathode coating film forming material. The additives and/or solvents applied to the catholyte may be the same as those applied to the above-mentioned polymer-based solid electrolyte.

The catholyte and the anolyte may have different compositions from each other, for example, the type and/or concentration of lithium salts may be different. The preferred composition of the catholyte and the anolyte may vary depending on the cell design and the functionality to be pursued. For example, in the case of a Si-rich cell, an excess of a cyclic carbonate compound (e.g., FEC) must be added to continuously form a coating film that suppresses side reactions caused by cracks in the active material during charge and discharge, but this has no functionality in the cathode and increases the resistance of the entire cell. In this case, an electrolyte composition with an excess of a cyclic carbonate compound such as FEC can be applied to the anode, and an electrolyte composition with high potential stability and low ionic conductivity can be applied to the cathode.

In an exemplary embodiment, the lithium salt contained in the catholyte may include Li ⁺ as a cation, and may include at least one selected from the group consisting of: F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (F₂SO₂)₂N⁻, CF₃CF₂(CF₃)₂CO⁻, (CF₃SO₂)₂CH⁻, CF₃(CF₂)₇SO₃⁻, CF₃CO₂⁻, CH₃CO₂⁻, SCN⁻ and (CF₃CF₂SO₂)₂N⁻ as an anion.

The lithium salt may be used alone or as a mixture of two or more thereof, as necessary. The lithium salt may be appropriately changed within the range that can be normally used, but may be included in the gel polymer electrolyte composition at a concentration of 0.8 M to 2 M, specifically 0.8 M to 1.5 M, in order to obtain an optimal effect of forming a coating film for preventing corrosion on the electrode surface.

The cathode current collector is not particularly limited so long as it has conductivity without causing chemical changes in the battery, and, for example, stainless steel, aluminum, nickel, titanium, fired carbon, or aluminum or stainless steel of which surface is treated with one of carbon, nickel, titanium, silver, or the like may be used.

The cathode active material is a compound capable of reversibly intercalating and deintercalating lithium, wherein the cathode active material may specifically include a lithium composite metal oxide including lithium and at least one metal such as cobalt, manganese, nickel, or aluminum. More specifically, the lithium composite metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O4 (where 0<Z<2), etc.), lithium-nickel-cobalt-based oxide (e.g., LiNi_{1-Y1}CoY₁O₂ (where 0<Y1<1), lithium-manganese-cobalt-based oxide (e.g., LiCo_{1-Y2}Mn_{Y2}O₂ (where 0<Y2<1), LiMn_{2-Z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃M_{S2})O₂ (where M is selected from the group consisting of Al, Fe, V, Cr, Ti, Ta, Mg, and Mo, and p2, q2, r3, and s2 are atomic fractions of each independent elements, wherein 0<p2<1, 0<q2<1, 0<r3<1, 0<s2<1, and p2+q2+r3+s2=1), etc.), and any one thereof or a compound of two or more thereof may be included.

Among these materials, in terms of the improvement of the capacity characteristics and stability of the battery, the lithium composite metal oxide may include LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂ and Li(Ni_{0.8}Mn_{0.1}Co_{0.1})O₂, etc.), or lithium nickel cobalt aluminum oxide (e.g., Li(Ni_{0.8}Co_{0.15}Al_{0.05})O₂, etc.).

The cathode active material may be included in an amount of 80 wt.% to 99.5 wt.%, particularly 85 wt.% to 95 wt.%, based on a total weight of solid content in the cathode slurry.

When the amount of the cathode active material is 80 wt.% or less, energy density is decreased and thus, capacity may be reduced.

The binder is a component that assists in the binding between the active material and the conductive material and in the binding with the current collector, wherein the binder is commonly added in an amount of 1 to 30 wt.%, based on the total weight of the solid content in the cathode slurry. The binder is added in an amount of 1 to 50 parts by weight, more specifically 3 to 15 parts by weight, based on the total weight of the solid content in the cathode slurry. When the amount of the binder is less than 1 part by weight, the adhesion between the electrode active material and the current collector may be insufficient, and when the amount is greater than 50 parts by weight, the adhesion may be improved, but the content of the electrode active material may be correspondingly decreased, which may lower the battery capacity.

Further, the conductive material is a material that provides conductivity without causing chemical changes in the battery, and can be added in an amount of 1 to 20 wt.%, based on the total weight of the solid content in the cathode slurry.

As typical examples of such a conductive material, a conductive material, such as: carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used, and those currently sold under the names, such as acetylene black-based conductive materials (Chevron Chemical Company, Denka black (Denka Singapore Private Limited), or Gulf Oil Company), Ketjen black, ethylene carbonate (EC)-based conductive materials (Armak Company), Vulcan XC-72 (Cabot Company), and Super P (Timcal Graphite & Carbon), may be used.

The solvent may include an organic solvent, such as N-methyl-2-pyrrolidone (NMP), and may be used in an amount such that a desirable viscosity is obtained when the cathode active material as well as selectively the binder and the conductive material are included. For example, the solvent may be included in an amount such that a concentration of the solid content in the slurry including the cathode active material as well as selectively the binder and the conductive material is in a range of 10 wt.% to 60 wt.%, preferably 20 wt.% to 50 wt.%.

### Anode

In a heterogeneous electrolyte-based secondary battery according to an embodiment of the present disclosure, the anode may be prepared by forming an anode mixture layer on an anode current collector, and then impregnated with the anolyte. The anode mixture layer may be prepared by coating the anode current collector with an anode slurry including an anode active material, a binder, a conductive material, a solvent, and the like, and then drying and rolling the coated anode current collector.

In an exemplary embodiment, the anolyte may include a lithium salt and a solvent, and optionally an additive. In this case, the anolyte may include a solvent with poor oxidation stability or an anode coating film forming material. The additives and/or solvents applied to the anolyte may be the same as those applied to the above-mentioned polymer-based solid electrolyte.

In an exemplary embodiment, the lithium salt contained in the anolyte may include Li ⁺ as a cation, and may include at least one selected from the group consisting of: F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (F₂SO₂)₂N⁻, CF₃CF₂(CF₃)₂CO⁻, (CF₃SO₂)₂CH⁻, CF₃(CF₂)₇SO₃⁻, CF₃CO₂⁻, CH₃CO₂⁻, SCN⁻ and (CF₃CF₂SO₂)₂N⁻ as an anion.

The lithium salt may be used alone or as a mixture of two or more thereof, as necessary. The lithium salt may be appropriately charged within the range that can be normally used, but may be included in the anode electrolyte at a concentration of 0.8 M to 2 M, specifically 0.8 M to 1.5 M, in order to obtain an optimal effect of forming a coating film for preventing corrosion on the electrode surface.

The anode current collector may generally have a thickness of 3 to 500 µm. The anode current collector is not particularly limited so long as it has conductivity without causing chemical changes in the battery, and, for example, copper, stainless steel, aluminum, nickel, titanium, fired carbon, or copper or stainless steel of which surface is treated with one of carbon, nickel, titanium, silver or the like, an aluminum-cadmium alloy, or the like may be used. Also, similar to the cathode current collector, the anode current collector may have fine protrusions and depressions formed on a surface thereof to enhance adherence of an anode active material. For example, the anode current collector may be used in various forms such as a film, a sheet, a foil, a net, a porous body, a foaming body, and a non-woven fabric structure.

Further, the anode active material may comprise a lithium metal, a carbon material capable of reversibly intercalating/deintercalating lithium ions, metals or alloys of lithium and these metals, a metal composite oxide, a material capable of doping and de-doping lithium, and a transition metal oxide.

As the carbon material capable of reversibly intercalating/deintercalating lithium ions, any carbon material may be used without particular limitation so long as it is a carbon-based anode active material generally used in a lithium ion secondary battery, and, as a typical example thereof, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature fired carbon) or hard carbon, mesophase pitch carbide, fired cokes, and the like.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

As the metal composite oxide, at least one selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃(0≤x≤1), LiₓWO₂(0≤x≤1), and SnₓMe₁₋ₓMe'_{y}O_{z} (where, Me: Mn, Fe, Pb, Ge; Me': Al, B, P, Si, Group I, II and III elements of the periodic table, halogen; 0<x≤1; 1≤y≤3; 1≤z≤8) may be used.

The material which may be doped and undoped with lithium may include Si, SiOₓ(0 < x < 2), Si-Y alloy (wherein Y is an element selected from the group consisting of an alkali metal, an alkaline earth metal, a Group 13 element, a Group 14 element, a transition metal, a rare earth element, and a combination thereof, and is not Si), Sn, SnO₂, Sn-Y (wherein Y is an element selected from the group consisting of an alkali metal, an alkaline earth metal, a Group 13 element, a Group 14 element, a transition metal, a rare earth element, and a combination thereof, and is not Sn), or the like, and at least one of these may be mixed and used with SiO₂. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The transition metal oxide may include a lithium-containing titanium composite oxide (LTO), vanadium oxide, lithium vanadium oxide, and the like.

The anode active material may be included in an amount of 80 wt.% to 99 wt.%, based on the total weight of the solid content in the anode slurry.

The binder is a component that assists in the binding between the conductive material, the active material, and the current collector, and is added in an amount of 1 to 30 wt.%, based on the total weight of the solid content in the anode slurry. Examples of the binder may include polyvinylidene fluoride(PVDF), polyvinyl alcohol, carboxymethylcellulose(CMC), starch, hydroxypropyl cellulose, regenerated cellulose, polyvinylpyrrolidone, tetrafluoroethylene, polyethylene, polypropylene, ethylene-propylene-diene polymer(EPDM), a sulfonated-EPDM, a styrene-butadiene rubber, a nitrile-butadiene rubber, a fluoro rubber, various copolymers thereof, or the like.

The conductive material may be the same as that used in the preparation of the cathode, and may be added in an amount of 1 to 20 wt.%, based on the total weight of the solid content in the anode slurry.

The solvent may include water or an organic solvent such as NMP (N-methyl-2-pyrrolidone), and may be used in an amount at which the anode active material, and optionally the binder, the conductive material, and the like included with the solvent has a preferred viscosity. For example, the solvent may be included in an amount at which a concentration of a solid content including the anode active material and optionally the binder and the conductive material is 50 wt.% to 95.wt %, preferably 70 wt.% to 90 wt.%.

In an exemplary embodiment, the first gel polymer and the second gel polymer may be mutually identical materials, or may be mutually different materials. The first gel polymer content of the anolyte and the second gel polymer content of the anolyte may be substantially identical or different from each other. That is, the first gel polymer content of the catholyte may be larger or smaller than the second gel polymer content of the anolyte.

In an exemplary embodiment, the separator may be in direct contact with the cathode and anode. Specifically, an additional layer may not be provided between the separator and the cathode or between the separator and the anode, and thus at least a part of the separator may be in direct contact with the cathode and anode. Therefore, the heterogenous electrolyte-based secondary battery according to an embodiment of the present disclosure may provide adhesiveness by curing the cathode/separator/anode under a compressed state, and thus may not require a separate adhesive material or stacking process.

### Method for Manufacturing a Heterogenous Electrolyte-based Secondary Battery

According to another embodiment of the present disclosure, there is provided a method for manufacturing a heterogenous electrolyte-based secondary battery, the method comprising the steps of: impregnating a spare cathode and a spare anode with a catholyte and an anolyte, respectively, to prepare a cathode and an anode; impregnating a separator with a polymer-based solid electrolyte, or preparing an electrolyte layer as a polymer-based solid electrolyte membrane; and stacking the cathode, the electrolyte layer and the anode in this order.

The manufacturing method according to an embodiment of the present disclosure can have advantages in terms of safety and cost, since the prior impregnation of the electrode and separator is performed followed by the assembly process, and is thereby capable of reducing the amount of an electrolyte by using a minimum amount thereof. In addition, current mass-production processes can be used in the same manner, except for the electrode electrolyte impregnation and crosslinking process, and thus there may be no need to add or change any special devices.

First, a spare cathode and a spare anode can be impregnated with a catholyte and an anolyte, respectively, to prepare a cathode and an anode. Specifically, a spare cathode prepared by forming a cathode mixture layer on a cathode current collector can be impregnated with a catholyte containing a first gel polymer, and a spare anode prepared by forming an anode mixture layer on the anode current collector can be impregnated with an anolyte containing a second gel polymer. This impregnation can be performed by using a method commonly used in this technical field.

In an exemplary embodiment, the impregnation step may be performed at room temperature for 2 to 48 hours for uniform impregnation of the whole cathode and anode. The first gel polymer content relative to the total weight of the cathode after impregnation may be 0.1 to 10 wt.%, and the second gel polymer content relative to the total weight of the anode after impregnation may be 0.1 to 10 wt.%.

Further, the separator may also be impregnated with a polymer-based solid electrolyte, or the electrolyte layer may be prepared as a polymer-based solid electrolyte membrane. Specifically, the separator and the polymer-based solid electrolyte may be the same as those described above, and may be impregnated in the same manner as the electrode. Such a separator can apply a separator impregnated with a minimum amount of a high-content polymer-based solid electrolyte or a high-content gel polymer thin film, thereby minimizing an increase in resistance.

Next, the cathode, separator, and anode may be sequentially stacked and cured. For example, the cathode, electrolyte layer, and anode may be sequentially arranged to form an electrode assembly. Specifically, the electrode assembly may be a stacked structure which comprises two types of electrodes, i.e., a cathode and an anode, and an electrolyte layer as a separator interposed between electrodes or disposed above or below one of the electrodes to insulate the electrodes from each other. The stacked structure may have various forms without limitation, such as: a cathode and anode of a given standard being stacked with a separator between them, or being wound in the form of a jelly roll. A cathode tab and an anode tab may be connected to the electrode assembly. Specifically, the cathode tab and the anode tab are respectively connected with the cathode and the anode of the electrode assembly, and may protrude to the outside of the secondary battery case to provide a path through which electrons can migrate.

Subsequently, the stacked cathode, separator, and anode can be thermally cured, and specifically, the catholyte impregnated in the cathode, the anolyte impregnated in the anode, and the polymer-based solid electrolyte of the separator can be cured. This curing step can be performed as a thermal curing process.

### [Advantageous Effects]

As set forth above, the gel polymer secondary battery according to an embodiment of the present disclosure can apply a high content gel of polymer-based solid electrolyte to a separator, thereby suppressing the movement of a substance with a large molecular weight between cathode and anode, selectively allowing permeation of only lithium ions within a cell, and maintaining the state in which the heterogeneous electrolyte is isolated. In addition, by utilizing a separator impregnated with a polymer-based solid electrolyte such as Li-Nafion, the composition of the cathode and anode electrodes can be changed in a cell designed to allow creation of only lithium ions, so that solvents, salts, additives, and the like having poor oxidation and reduction stability at a specific potential can be used without side reactions over a wide operating voltage range.

### [BRIEF DESCRIPTION OF THE DRAWINGS]

FIG. 1 is a schematic illustration of a mechanism for suppressing the movement of anions and additives between cathode and anode in a heterogenous electrolyte-based secondary battery according to an embodiment of the present disclosure; and
FIGS. 2 and 3 are plots comparing the charge/discharge analysis results of the heterogenous electrolyte-based secondary batteries according to Examples 1 to 2 of the present disclosure.

### [DETAILED DESCRIPTION OF THE EMBODIMENTS]

Hereinafter, the Examples of the present disclosure will be described in detail so as to be easily carried out by a person with ordinary skill in the art to which the invention pertains. However, the present disclosure may be realized in various different forms and is not limited to the Examples provided herein.

### Example 1: Heterogeneous gel electrolyte application cell

1M LiPF₆ was dissolved in a solvent (ethylene carbonate(EC): propylene carbonate(PC) = 5:5 volume ratio), and 0.06 wt.% of AIBN as a polymerization initiator was added thereto to prepare a catholyte, and an NCM 811 cathode was impregnated therewith. In addition, 2M LiFSI was dissolved in a solvent (ethylene carbonate(EC): propylene carbonate(PC) = 5:5 volume ratio), and 0.06 wt.% of AIBN as a polymerization initiator was added thereto to prepare an anolyte, and a graphite anode was impregnated therewith.

Further, 20 wt.% of Li-Nafion and 0.06 wt.% of AIBN as a polymerization initiator were added to an NMP solvent to prepare a polymer-based solid electrolyte composition, and a PP membrane was impregnated therewith. After the separator impregnation, it was vacuum-dried at 100°C for 12 hours in order to remove the NMP solvent.

The prepared materials were sequentially stacked in the order of cathode/separator/anode, and thermally cured in a compressed state to produce a 'Set 1' full-cell.

### Example 2: Heterogeneous gel electrolyte membrane application cell

A 'Set2' full-cell (Li-Nafion membrane: 13 µm, membrane: about 70 µm) was produced in the same manner as in Example 1, except that Li-Nafion membrane (Nafion membrane purchased from Sigma-Aldrich, reacted with 1M LiOH solution and lithiated) was used as a polymer-based solid electrolyte.

### Example 3: Heterogeneous gel electrolyte application cell

A 'Set3' full-cell was produced in the same manner as in Example 1, except that the PP separator was used, in which the polymer-based solid electrolyte was not impregnated into the composition.

### Experimental Example 1: Charge-Discharge Analysis

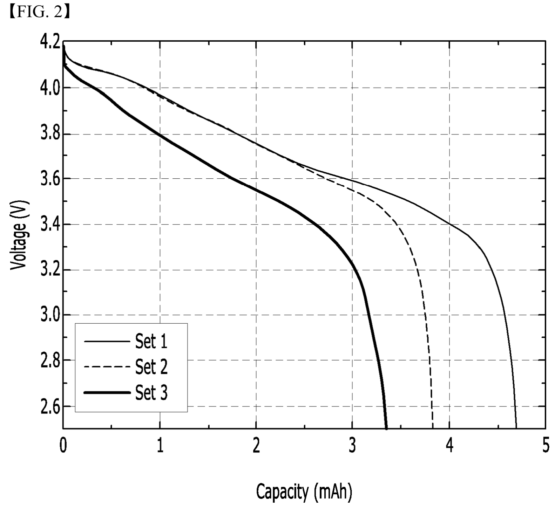

The charge/discharge efficiency of the secondary batteries produced in Example 1 to 3 was evaluated, and the results are shown in FIG. 2. Specifically, the samples of Example 1 to 3 were respectively charged to 4.20 V at a constant current of 0.1 C, left for 30 minutes, and then discharged to 2.5 V at a constant current of 0.1 C to observe the charge/discharge characteristics in the first cycle.

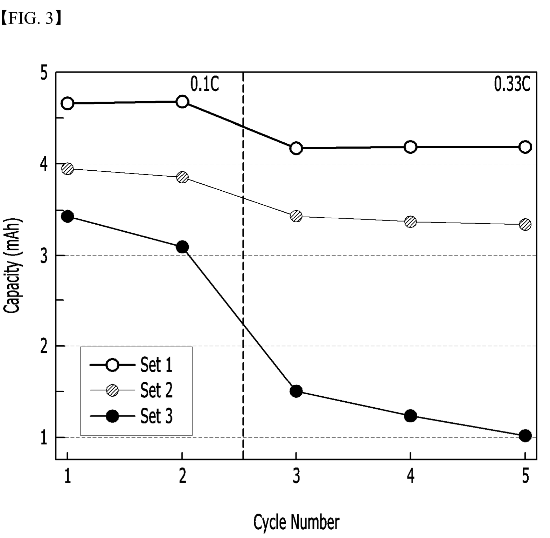

In addition, the samples of Example 1 to 3 were initially charged and discharged twice at 0.1 C, and then charged/discharge were performed three times at 0.33 C, and charge/discharge were repeatedly performed, and the discharge capacity was measured for each cycle, which is shown in FIG. 3.

During the initial charging process, PC penetrates into the anode graphite lattice structure in the form of Li-(PC)n coordinated with Li⁺ to cause structural destruction and exfoliation and result in a decrease in capacity, wherein when 2M LiFSI is applied, the coordination number between Li⁺-PC decreases, so that the performance degradation due to exfoliation is significantly reduced.

Referring to FIGS. 2 and 3, it can be confirmed that in Example 1 (Set 1), the movement of the electrolyte impregnated in the cathode via the separator was blocked, and in Example 2 (Set 2), the movement via the heterogeneous gel electrolyte membrane was blocked. However, in the case of Example 2 (Set2), the mutual movement of the electrolyte was blocked, but due to the large thickness of the membrane, while in Example 3 (Set3), the electrolyte impregnated in the cathode was moved and mixed with the anode-impregnated electrolyte, showing a tendency to significantly reduce capacity and lifetime. Through this, it can be confirmed that Li-Nafion impregnated in the separator or Li-Nafion membrane effectively blocks the movement of substances between cathode and anode.

Therefore, the gel polymer secondary battery according to the present disclosure can maintain the isolation of the heterogeneous electrolyte between cathode and anode by applying the separator impregnated with Li-Nafion, and can have a wide operating voltage range and an effect of reducing the amount of electrolyte.

## Claims

1. A heterogenous electrolyte-based secondary battery comprising:
a cathode impregnated with a catholyte;
an anode impregnated with an anolyte; and
a separator interposed between the cathode and anode, the separator comprising a polymer-based solid electrolyte,
wherein the polymer-based solid electrolyte comprises a polymer resin and an electrolyte, and wherein the catholyte and the anolyte have different compositions.

2. The heterogenous electrolyte-based secondary battery according to claim 1, wherein:
the separator is impregnated with the polymer-based solid electrolyte or the polymer-based solid electrolyte membrane.

3. The heterogenous electrolyte-based secondary battery according to claim 1, wherein:
the polymer resin comprises a perfluorosulfonic acid resin.

4. The heterogenous electrolyte-based secondary battery according to claim 3, wherein:
the perfluorosulfonic acid resin is a lithiated Nafion.

5. The heterogenous electrolyte-based secondary battery according to claim 1, wherein:
the polymer resin content, relative to the total weight of the separator, is 10 to 30 wt.%.

6. The heterogenous electrolyte-based secondary battery according to claim 1, wherein:
the polymer resin content, relative to the total weight of the separator, is 15 to 25 wt.%.

7. The heterogenous electrolyte-based secondary battery according to claim 1, wherein:
the catholyte and anolyte comprise at least one lithium salt selected from the group consisting of: LiSCN, LiN(CN)₂, LiClO₄, LiBF₄, LiAsF₆, LiPF₆, LiCF₃SO₃, LiC(CF₃SO₂)₃, LiN(SO₂C₂F₅)₂, LiN(SO₂CF₃)₂, LiN(SO₂F)₂, LiSbF₆, LiPF₃(CF₂CF₃)₃, LiPF₃(CF₃)₃ and LiB(C₂O₄)₂.

8. The heterogenous electrolyte-based secondary battery according to claim 7, wherein:
the catholyte and anolyte comprise different lithium salts.

9. The heterogenous electrolyte-based secondary battery according to claim 7, wherein:
the catholyte comprises a lithium salt at a concentration of 0.1 M to 2 M.

10. The heterogenous electrolyte-based secondary battery according to claim 7, wherein:
the anolyte comprises a lithium salt at a concentration of 1 M to 3 M.

11. The heterogenous electrolyte-based secondary battery according to claim 7, wherein: the separator has a selective permeability to lithium ions (Li⁺).

12. The heterogenous electrolyte-based secondary battery according to claim 7, wherein:
the separator is in direct contact with the cathode and the anode.

13. A method for manufacturing a heterogenous electrolyte-based secondary battery, the method comprising:
impregnating a spare cathode and a spare anode with a catholyte and an anolyte, respectively, to prepare a cathode and an anode;
impregnating a separator with a polymer-based solid electrolyte, or preparing an electrolyte layer as a polymer-based solid electrolyte membrane; and
sequentially stacking the cathode, the electrolyte layer.
